# EUROPÄISCHE PATENTSCHRIFT

(11) **EP 1 195 786 B1**
(45) Veröffentlichungstag und Bekanntmachung des Hinweises auf die Patenterteilung: **13.12.2006**
(21) Anmeldenummer: 01123742.7
(22) Anmeldetag: 04.10.2001
(51) Int. Cl.: H01H 9/02

(54) **Funktaster**
Radio switch
Commutateur de signaux radio

(30) Priorität: 05.10.2000 DE 20017131 U
(43) Veröffentlichungstag der Anmeldung: 10.04.2002
(73) Patentinhaber: Merten GmbH & Co. KG, 51674 Wiehl (DE)
(72) Erfinder: Vicktorius, Richard, Dipl.-Ing., 50739 Köln (DE)
(74) Vertreter: Selting, Günther

(56) Entgegenhaltungen:
- EP-A- 0 846 458
- US-A- 3 892 911
- US-A- 5 699 221

## Beschreibung

Die Erfindung betrifft einen Funktaster mit einem Gehäuse, das einen Sensor und einen Sender enthält und ein Betätigungsorgan aufweist.

Bekannt sind Funktaster, die beispielsweise an einer Tür befestigt werden können und die einen Sender enthalten, welcher mit einem entfernt angeordneten Empfänger kommuniziert. Mit dem Funktaster können Signale von einer Stelle, die nicht an das elektrische Versorgungsnetz angeschlossen ist, zu einem davon entfernt liegenden Ort übertragen werden. Funktaster enthalten zur Versorgung des Sensors eine Batterie. Ein Betätigungsorgan, das beispielsweise manuell betätigt werden kann, wirkt auf den Sensor ein, der seinerseits den Sender in Funktion setzt. Ein Funktaster kann beispielsweise an einer Glastür oder Glaswand befestigt sein, um mittels Fernbedienung das Licht oder einen anderen elektrischen Verbraucher zu schalten.

Ein Funktaster nach dem Oberbegriff des Patentanspruchs 1, bekannt aus dem System DELTA-FERN von Siemens, das vor dem Jahr 2000 eingebaut wurde. Dieser Funktaster enthält einen als Gehäuseunterteil bezeichneten Boden, der auf die Wand geklebt oder geschraubt werden kann und einen umlaufenden Rahmen aufweist, in den ein Gehäuse, welches den Elektronikteil und ein Batteriefach enthält, eingesetzt werden kann. Frontseitig wird dieses Gehäuse mit einer Gehäuseabdeckung bedeckt. Boden, Gehäuse und Gehäuseabdeckung bilden eine Sandwichstruktur, wobei jede dieser Komponenten mindestens mit ihrem Rand außen sichtbar ist.

Aus US-A-5,699,221 ist ein Zusatzgerät für ein elektrisches Installationsgerät bekannt, an dem eine zusätzliche Einheit zur Übertragung von Daten oder Befehlen an eine entfernte Stelle angebracht werden kann. Ein Sender ist in diesem Installationsgerät nicht enthalten.

Der Erfindung liegt die Aufgabe zugrunde, einen Funktaster zu schaffen, der ein einfach aufgebautes und funktionsgerechtes Gehäuse aufweist.

Die Lösung dieser Aufgabe erfolgt erfindungsgemäß mit den im Anspruch 1 angegebenen Merkmalen. Hiernach ist vorgesehen, dass der Boden in einer Öffnung des Gehäuses passend aufgenommen ist und über die Umfangswand des Gehäuses nicht vorsteht, und dass die Befestigung des Gehäuses an dem Boden über einen Klemmsitz erfolgt.

Der Boden dient nicht nur dem Verschließen des Gehäuses sondern auch als mechanische Halterung. Bei abgenommenem Boden ist die Batterie zugänglich, so dass sie ausgewechselt werden kann. Das Gehäuse bildet gewissermaßen einen Ring, der an einem Ende durch den Boden und am gegenüberliegenden Ende durch das Betätigungsorgan verschlossen ist.

Gemäß einer bevorzugten Ausgestaltung der Erfindung ist eine Wanddose vorgesehen, die das Gehäuse passend aufnimmt. Das Gehäuse kann dabei in unterschiedlichen Arten montiert werden, nämlich auf der Befestigungsfläche oder in einer an der Befestigungsfläche vorgesehenen Bohrung. Bei der Montage in einer Bohrung wird zunächst die Wanddose in die Bohrung eingesetzt und dann wird das Gehäuse in die Wanddose eingesetzt. Das Gehäuse ist somit gleichermaßen für eine aufgesetzte Montage wie für eine in der Wand versenkte Montage geeignet. Der erfindungsgemäße Funktaster eignet sich besonders für die Anbringung an Glaswänden, in denen keine elektrischen Leitungen verlegt sind. Hierzu zählen auch Fenster und Türen. Der Funktaster ermöglicht eine große Freiheit bei der Wahl des Positionierungsortes für ein Schaltelement, unabhängig von der Verlegung des Versorgungsnetzes.

Zur Erzielung eines definierten Klemmsitzes zwischen Boden und Gehäuse oder zwischen dem Gehäuse und der Wanddose kann jeweils in eines der Teile, die ineinandergesetzt werden, in einer umlaufenden Nut ein teilweise herausragender Ring angeordnet sein. Dieser Ring vergrößert oder verkleinert den Durchmesser des einen Teils in Richtung auf das andere Teil hin, so dass beide Teile einer örtlichen Klemmung unterliegen. Das Verbinden der beiden Teile erfolgt durch bloßes Einschieben des inneren Teils in das äußere Teil, ohne Schrauben oder andere Verbindungselemente.

Im Folgenden wird unter Bezugnahme auf die Zeichnungen ein bevorzugtes Ausführungsbeispiel der Erfindung näher erläutert.

Es zeigen:
- Fig. 1: eine perspektivische Ansicht des Funktasters,
- Fig. 2: einen Längsschnitt durch den Funktaster von Fig. 1,
- Fig. 3: eine Explosionsdarstellung des Funktasters,
- Fig. 4: eine Ansicht aus Richtung der Pfeile IV-IV von Fig. 3,
- Fig. 5: eine Ansicht aus Richtung der Pfeile V-V von Fig. 3,
- Fig. 6: die Montage des Funktasters auf einer Wand, und
- Fig. 7: die Montage des Funktasters in einer Wand unter Verwendung einer passenden Wanddose.

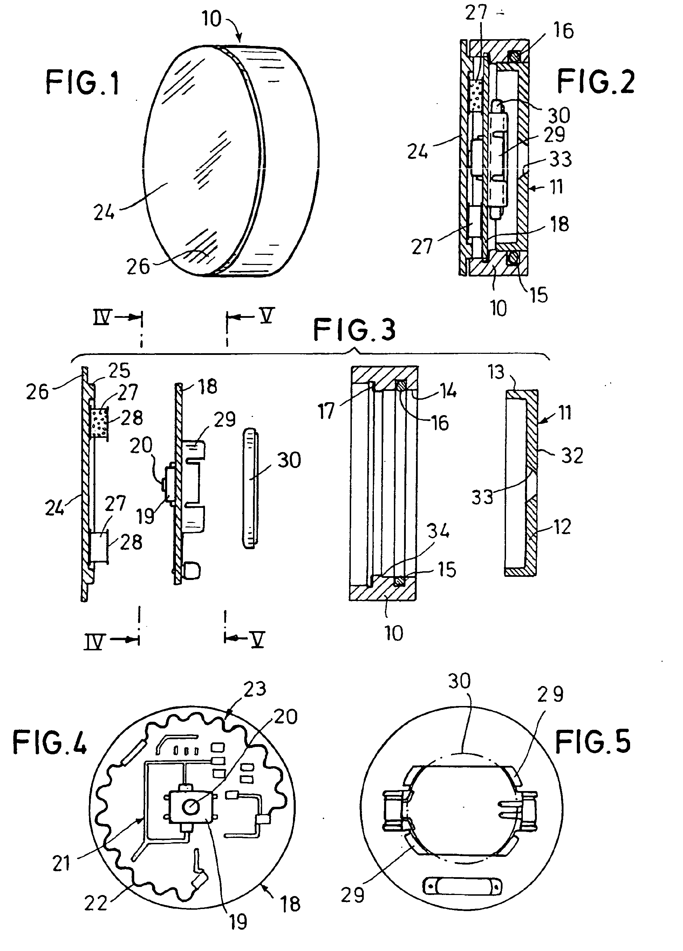

Der in den Fign. 1 - 5 dargestellte Funktaster weist ein Gehäuse 10 auf, das ringförmig ausgebildet ist und an einem Ende durch einen Boden 11 verschlossen ist. Der Boden 11 weist eine Bodenwand 12 und einen umlaufenden Rand 13 auf, der rohrförmig in das innere des Gehäuses 10 hineinragt. Das Gehäuse 10 enthält eine Öffnung 14, in die der Rand 13 des Bodens 11 passend einsetzbar ist. In der Öffnung 14 befindet sich eine umlaufende ringförmige Nut 15, in der ein elastischer Ring 16 sitzt, welcher aus der Nut herausragt und einen Klemmsitz für den Rand 13 des Bodens 11 bildet.

Das Gehäuse 10 enthält eine ringförmige Anschlagfläche 17 für eine runde Leiterplatte 18. Die Leiterplatte 18 ist an der Anschlagfläche 17 angeklebt oder anderweitig befestigt. Die Leiterplatte 18 trägt an ihrer Vorderseite einen Sensor 19, der hier als Tastschalter ausgebildet ist und einen vorstehenden bewegbaren Betätigungsknopf 20 aufweist. Die Leiterplatte 18 trägt eine gedruckte Schaltung 21, wozu auch eine Antenne 22 gehört, sowie verschiedene elektrische Komponenten, die zusammen mit der Antenne 22 einen Sender 23 bilden.

Die Frontseite des Gehäuses 10 wird durch das Betätigungsorgan 24 bedeckt. Das Betätigungsorgan ist eine Platte mit einem kurzen Rohransatz 25 zur Führung in dem Gehäuse 10 und einem seitlich überstehenden Rand 26. An der Rückseite des Betätigungsorgans 24 sind elastische Blöcke 27 aus Schaumstoff angeklebt, die gegen die Leiterplatte 18 bzw. die darauf befestigten Komponenten drücken und mit einer Klebeschicht 28 auf der Leiterplatte 18 festgeklebt sind. Das Betätigungsorgan 24 kann relativ zur Leiterplatte 18 geringe Bewegungen durch Verformung der Blöcke 27 ausführen und es drückt mit seiner Rückseite gegen den Betätigungsknopf 20 des Sensors 19.

Wie aus Fig. 1 erkennbar ist, hat der Rand 26 des Betätigungsorgans 24 den gleichen Außendurchmesser wie das Gehäuse 10, so dass der Rand 26 bündig mit der Umfangsfläche des Gehäuses 10 abschließt.

An der Rückseite der Leiterplatte 18 befindet sich eine Halterung 29 für eine Batterie 30. Die Halterung 29 weist Kontaktelemente auf, die gegen die Batterie 30 drücken. Die Batterie 30 ist bei abgenommenem Boden 11 zum Auswechseln zugänglich.

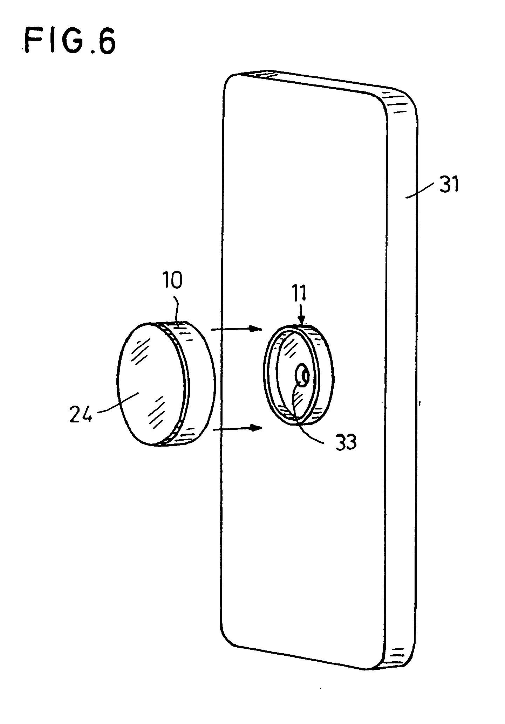

Bei der Befestigung des Funktasters auf einer Wand 31 wird gemäß Fig. 6 der Boden 11, dessen Rückseite als Klebefläche 32 ausgebildet ist und der alternativ hierzu eine Schraubenöffnung 33 aufweist, auf der Außenfläche der Wand 31 befestigt. Die Wand 31 kann beispielsweise eine Glasscheibe sein. Das Gehäuse 10 wird auf den Boden 11 aufgeschoben, bis der Rand 13 des Bodens 11 gegen einen Anschlag 34 des Gehäuses 10 stößt. Durch den Klemmsitz des Ringes 16 sitzt das Gehäuse 10 fest auf dem Boden 11, der in dem Gehäuse versenkt angeordnet ist. Das Betätigungsorgan 24 ist von den Blöcken 27 in geringem Abstand vor dem Gehäuse 10 gehalten und es kann zum Zwecke der Betätigung des Sensors 19 gegen das Gehäuse 10 gedrückt werden.

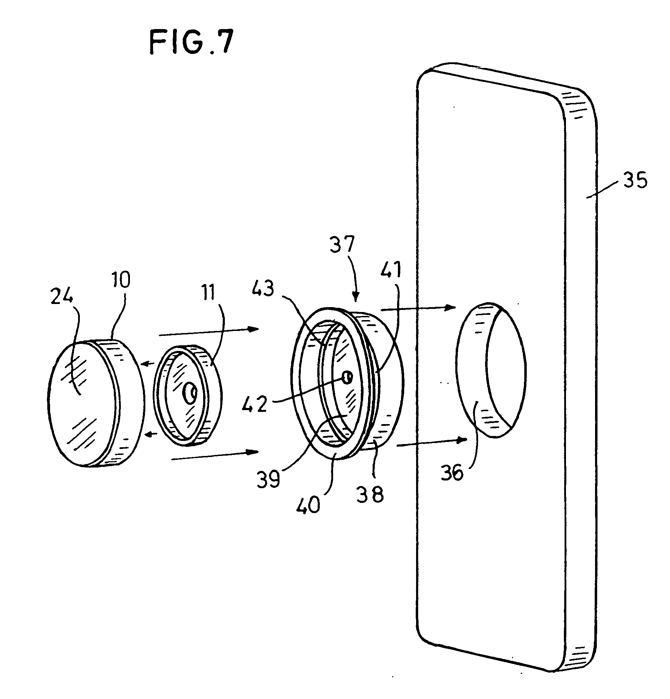

In Fig. 7 ist der Fall dargestellt, dass der Funktaster in einer Wand 35 versenkt montiert werden soll. Hierbei wird in der Wand 35 eine Montagebohrung 36 angebracht. In diese wird eine Wanddose 37 passend und klemmend eingesetzt. Die Wanddose 37 weist eine zylindrische Umfangswand 38, einen einstückig angeformten Boden 39 und einen vorderen Zierflansch 40 auf. In einer Ringnut an der Außenseite der Umfangswand 38 sitzt ein elastischer Ring 41, der reibend an der Wand der Montagebohrung 36 angreift und die Wanddose in der Wand 35 festhält. In dem Boden 39 sind zwei Löcher 42 vorgesehen, um mit einem spitzen Gegenstand, der von der Rückseite her eingeführt wird, gegen den Boden 11 des Gehäuses 10 drücken zu können. Auf diese Weise kann das Gehäuse 10, das passend in der Wanddose 37 sitzt, aus der Wanddose entfernt werden. Im innern der Wanddose 37 befindet sich ebenfalls ein in einer umlaufenden Nut sitzender elastischer Ring 43, der an der Umfangsfläche des Gehäuses 10 angreift und einen Klemmsitz für das Gehäuse bildet.

Das Gehäuse 10 mit dem Boden 11 kann aus der Wanddose 37 entfernt werden. Dann kann der Boden 11 aus dem Gehäuse 10 herausgenommen werden, um einen Batteriewechsel durchzuführen.

Die Erfindung ermöglicht es, das Gehäuse 10 auf der Außenfläche einer Wand 31 zu montieren, wie in Fig. 6 oder in einer Montagebohrung 36 einer Wand 35, wie in Fig. 7. In dem Fall von Fig. 7 liegt das Betätigungsorgan 24 annähernd bündig in der Ebene des Zierflansches 40.

## Patentansprüche

1. Funktaster mit einem Gehäuse (10), das ein auf einen Sensor (19) einwirkendes Betätigungsorgan (24) enthält, und mit einem in dem Gehäuse (10) angeordneten und von dem Sensor (19) in Funktion setzbaren Sender (23), wobei das Gehäuse (10) an der dem Betätigungsorgan (24) abgewandten Seite durch einen abnehmbaren Boden (11) verschlossen ist, der als Wandhalter ausgebildet ist,
**dadurch gekennzeichnet,**
**dass** der Boden (11) in einer Öffnung (14) des Gehäuses (10) passend aufgenommen ist und über die Umfangswand des Gehäuses (10) nicht vorsteht, und
**dass** die Befestigung des Gehäuses (10) an dem Boden über einen Klemmsitz erfolgt.

2. Funktaster nach Anspruch 1, **dadurch gekennzeichnet, dass** das Gehäuse (10) eine Batterie (30) enthält, die nach Abnehmen des Bodens (11) zugänglich ist.

3. Funktaster nach Anspruch 1 oder 2, **dadurch gekennzeichnet, dass** eine Wanddose (37) vorgesehen ist, die das Gehäuse (10) passend aufnimmt.

4. Funktaster nach Anspruch 3, **dadurch gekennzeichnet, dass** bei in die Wanddose (37) eingesetztem Gehäuse (10) das Betätigungsorgan (24) im Wesentlichen bündig mit einem Zierflansch (40) der Wanddose (37) liegt.

5. Funktaster nach Anspruch 3, **dadurch gekennzeichnet, dass** der Boden (11) oder das Gehäuse (10) einen in einer umlaufenden Nut (15) sitzenden und teilweise herausragenden Ring (16) zur Erzielung des Klemmsitzes enthält.

6. Funktaster nach Anspruch 3, **dadurch gekennzeichnet, dass** die Wanddose (37) oder das Gehäuse einen in einer umlaufenden Nut sitzenden und teilweise herausragenden Ring (43) zur Erzielung eines Klemmsitzes zwischen Wanddose und Gehäuse enthält.

7. Funktaster nach Anspruch 3, **dadurch gekennzeichnet, dass** die Wanddose (37) einen nach außen abstehenden Zierflansch aufweist.

## Claims

1. A radio switch comprising a housing (10) including an actuator (24) provided to act on a sensor (19), and comprising a transmitter (23) arranged within the housing (10) and adapted to be actuated by the sensor (19), the housing (10) on the side thereof facing away from the actuator (24) being closed by a removable bottom (11) formed as a wall mount holder,
**characterized in**
**that** the bottom (11) is fittingly received in an opening (14) of the housing (10) without projecting beyond the peripheral wall of the housing (10), and
**that** the attachment of the housing (10) to the bottom (11) is effected by force fit.

2. The radio switch according to claim 1, **characterized in that** the housing (10) includes a battery (30) which is accessible after removal of the bottom (11).

3. The radio switch according to claim 1 or 2, **characterized in that** a wall socket (37) is provided to have the housing (10) fitted therein.

4. The radio switch according to claim 3, **characterized in that**, with the housing (10) inserted into the wall socket (37), the actuator (24) is arranged substantially flush with a decorative flange (40) of the wall socket (37).

5. The radio switch according to claim 3, **characterized in that** the bottom (11) or the housing (10) includes a ring (16), seated in a circumferential groove (15) and partially projecting therefrom, for effecting said force fit.

6. The radio switch according to claim 3, **characterized in that** the wall socket (37) or the housing includes a ring (43), seated in a circumferential groove and partially projecting therefrom, for effecting a force fit between the wall socket and the housing.

7. The radio switch according to claim 3, **characterized in that** the wall socket (37) is provided with an outwardly projecting decorative flange.

## Revendications

1. Commutateur de signaux radio avec un boîtier (10) contenant un organe de manoeuvre (24) agissant sur un capteur (19) et avec un émetteur (23) disposé dans le boîtier (10) et pouvant être mis en fonction par le capteur (19), sur le côté opposé à l'organe de manoeuvre (24), le boîtier (10) étant fermé par un fond amovible (11), qui est conçu en tant que support mural,
**caractérisé en ce que**
le fond (11) est logé de façon ajustée dans une ouverture (14) du boîtier (10) et ne dépasse pas de la paroi périphérique du boîtier (10), et
la fixation du boîtier (10) sur le fond est assurée par ajustement serré.

2. Commutateur de signaux radio selon la revendication 1, **caractérisé en ce que** le boîtier (10) contient une batterie (30) qui est accessible après avoir retiré le fond (11).

3. Commutateur de signaux radio selon la revendication 1 ou 2, **caractérisé en ce qu'**on a prévu une boîte encastrée (37) dans laquelle le boîtier (10) est logé de façon ajustée.

4. Commutateur de signaux radio selon la revendication 3, **caractérisé en ce que** lorsque le boîtier (10) est inséré dans la boîte encastrée (37), l'organe de manoeuvre (24) est sensiblement à fleur d'une bride décorative (40) de la boîte encastrée (37).

5. Commutateur de signaux radio selon la revendication 3, **caractérisé en ce que** le fond (11) ou le boîtier (10) contient une bague (16) logée dans une rainure périphérique (15) et partiellement saillante, pour obtenir l'ajustement serré.

6. Commutateur de signaux radio selon la revendication 3, **caractérisé en ce que** la boîte encastrée (37) ou le boîtier contient une bague (43) partiellement saillante logée dans une rainure périphérique, pour obtenir un ajustement serré entre la boîte encastrée et le boîtier.

7. Commutateur de signaux radio selon la revendication 3, **caractérisé en ce que** la boîte encastrée (37) comporte une bride décorative débordant vers l'extérieur.
